(19) Europäisches Patentamt
European Patent Office
Office européen des brevets

(11) EP 4 597 673 A1

(12) **EUROPEAN PATENT APPLICATION**
published in accordance with Art. 153(4) EPC

(43) Date of publication:
**06.08.2025 Bulletin 2025/32**

(21) Application number: **22960211.5**

(22) Date of filing: **30.09.2022**

(51) International Patent Classification (IPC):
***H01M 10/0567*** *(2010.01)* ***H01M 4/36*** *(2006.01)*

(52) Cooperative Patent Classification (CPC):
**H01M 4/36; H01M 10/0567;** Y02E 60/10

(86) International application number:
**PCT/CN2022/123019**

(87) International publication number:
**WO 2024/065582 (04.04.2024 Gazette 2024/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventors:
- **ZHANG, Shan**
  **Ningde, Fujian 352100 (CN)**
- **LIU, Jianyu**
  **Ningde, Fujian 352100 (CN)**
- **LI, Wenqiang**
  **Ningde, Fujian 352100 (CN)**
- **TANG, Chao**
  **Ningde, Fujian 352100 (CN)**

(74) Representative: **Icosa**
**83 avenue Denfert-Rochereau**
**75014 Paris (FR)**

(54) **ELECTROCHEMICAL DEVICE AND ELECTRONIC DEVICE**

(57) An electrochemical device of this application includes a positive electrode, a negative electrode, and an electrolyte, where the positive electrode includes a positive electrode active material, the positive electrode active material includes element A, and element A is selected from at least one of La, Y, or Nb; based on a mass of the positive electrode active material, a mass percentage of element A is x%; the electrolyte includes a compound represented by formula (I); and based on a mass of the electrolyte, a mass percentage of the compound represented by formula (I) is a%.

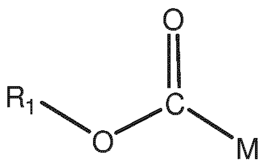 formula (I)

EP 4 597 673 A1

## Description

### TECHNICAL FIELD

This application relates to the field of electrochemistry, and in particular, to an electrochemical device and an electronic device.

### BACKGROUND

Lithium-ion batteries have advantages such as high energy density, light weight, and long cycle life, and are widely used in consumer batteries. With the development of electronic products towards thinness and portability, the requirements for lithium-ion batteries are continuously increasing. Developing lithium-ion batteries with higher volumetric energy density and longer cycle life is one of the main market demands. In addition to high-temperature cycling stability, people have proposed more stringent requirements for product usage conditions, such as a period of time within which a battery is left standing for an interval cycle before and after full charge during cycling at high temperatures. Currently, a doping element in a positive electrode material can enhance the structural stability of the material and increase the high-temperature cycling retention rate, but an excessive doping amount significantly reduces the capacity of the material. Most positive electrode protection additives can improve the cycling performance at high temperatures and ITC, but the improvement is limited and the cycling performance at room temperature is not ensured.

### SUMMARY

In view of the problems existing in the prior art, an objective of this application is to provide an electrochemical device and an electronic device.

To achieve the above objective, this application provides an electrochemical device, including a positive electrode, a negative electrode, and an electrolyte, where the positive electrode includes a positive electrode active material, the positive electrode active material includes element A, and element A is selected from at least one of La, Y, or Nb; based on a mass of the positive electrode active material, a mass percentage of element A is x%; and the electrolyte includes a compound represented by formula (I):

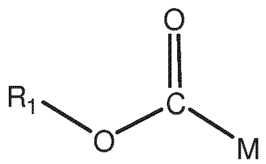 formula (I);

where M is selected from at least one of formula (I-A) or formula (I-B):

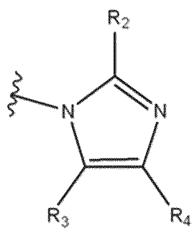 formula (I-A) 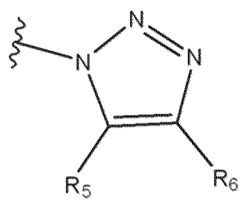 formula (I-B);

$R_1$ is selected from a substituted or unsubstituted $C_{1-6}$ alkyl group or a substituted or unsubstituted $C_{2-6}$ alkoxyalkyl group, where when substituted, a substituent group is selected from at least one of a fluorine atom, a $C_{2-6}$ alkenyl group, a $C_{2-6}$ alkynyl group, a cyano group, a sulfonyl group, or a silyl group; and

$R_2$, $R_3$, $R_4$, $R_5$, and $R_6$ are each independently selected from hydrogen, a substituted or unsubstituted $C_{1-6}$ alkyl group, a substituted or unsubstituted $C_{2-6}$ alkenyl group, a substituted or unsubstituted $C_{2-6}$ alkynyl group, a substituted or unsubstituted $C_{2-6}$ alkoxyalkyl group, a fluorine atom, a cyano group, or a sulfonyl group, where when substituted, a substituent group is selected from at least one of a fluorine atom, an aldehyde group, or a cyano group;

where in formula (I-A), $R_3$ and $R_4$ are capable of bonding to form a cyclic structure and in formula (I-B), $R_5$ and $R_6$ are capable of bonding to form a cyclic structure; and

based on a mass of the electrolyte, a mass percentage of the compound represented by formula (I) is a%.

In some embodiments, the compound represented by formula (I) is selected from at least one of compounds represented by formula (I-1) to formula (I-20):

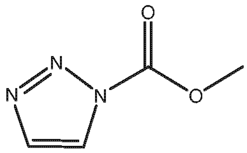 formula (I-1) 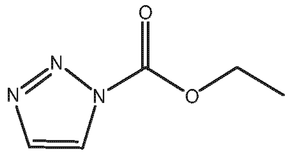 formula (I-2)

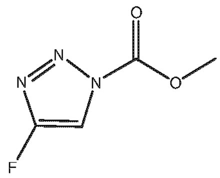 formula (I-3) 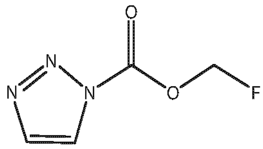 formula (I-4)

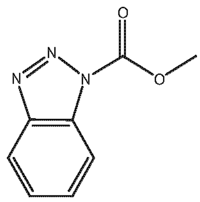 formula (I-5) 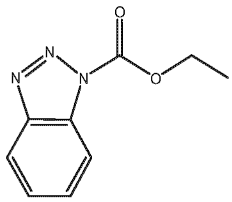 formula (I-6)

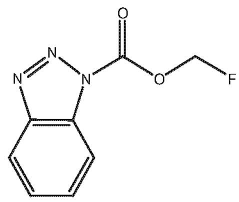 formula (I-7) 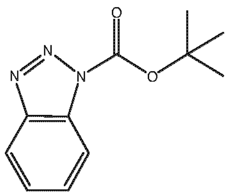 formula (I-8)

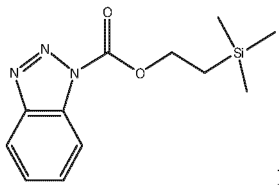 formula (I-9) 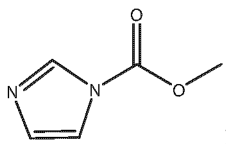 formula (I-10)

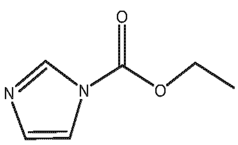 formula (I-11) 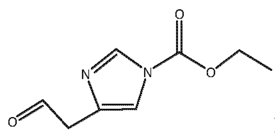 formula (I-12)

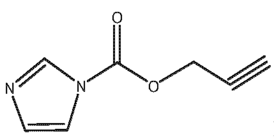 formula (I-13) 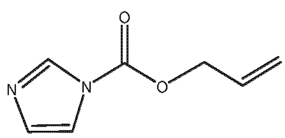 formula (I-14)

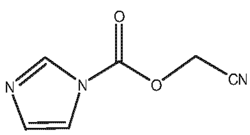 formula (I-15) 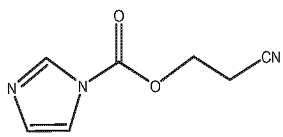 formula (I-16)

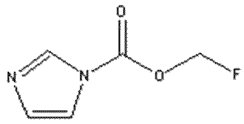 formula (I-17) 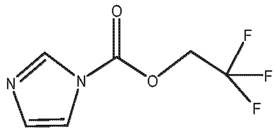 formula (I-18)

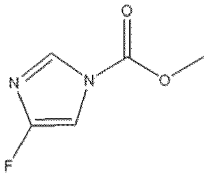 formula (I-19) 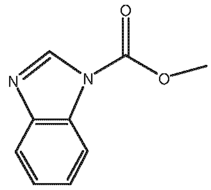 formula (I-20).

In some embodiments, x, a, and x/a satisfy at least one of the following conditions (a) to (c):

(a)

$$0.05 \leq x \leq 2;$$

(b)

$$0.01 \leq a \leq 2;$$

(c) $0.1 < x/a \leq 5$, and preferably $1.5 \leq x/a \leq 3$.

In some embodiments, the electrolyte further includes a trinitrile compound; and based on the mass of the electrolyte, a mass percentage of the trinitrile compound is b%; where $0.1 < b \leq 5$ is satisfied; and the trinitrile compound is selected from at least one of 1,2,4-butanetricarbonitrile, 1,3,5-benzenetricarbonitrile, 2,4,6-trifluorobenzene-1,3,5-tricarbonitrile, 2-bromobenzene-1,3,5-tricarbonitrile, 1,3,6-hexanetricarbonitrile, 1,2,3-propanetricarbonitrile, 1,3,5-pentanetricarbonitrile, or 1,2,6-hexanetricarbonitrile.

In some embodiments, the electrolyte further includes a compound represented by formula (II):

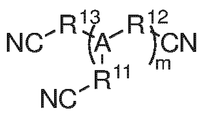 formula (II);

where m is 1, 2, or 3, and A is independently selected from formula (I-B1) or formula (I-B2):

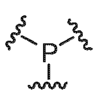 (I-B1) 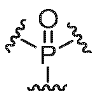 (I-B2);

where $R^{11}$, $R^{12}$, and $R^{13}$ are each independently selected from a covalent single bond, a substituted or unsubstituted $C_1$-$C_6$ alkylene group, a substituted or unsubstituted $C_2$-$C_6$ alkenylene group, a substituted or unsubstituted $C_2$-$C_{10}$ alkynylene group, or a substituted or unsubstituted $C_3$-$C_{10}$ cycloalkylene group, where when substituted, a substituent group is selected from halogen; and

based on the mass of the electrolyte, a mass percentage of the compound represented by formula (II) is c%, where $0.1 < c \leq 5$ is satisfied, and preferably $0.1 < c \leq 4$ is satisfied.

In some embodiments, the compound represented by formula (II) is selected from at least one of compounds represented by formula (II-1) to formula (II-7):

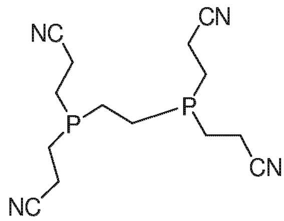

formula (II-1)

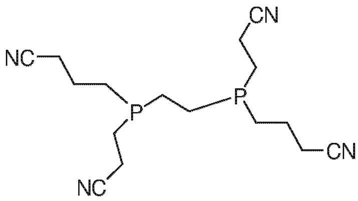

formula (II-2)

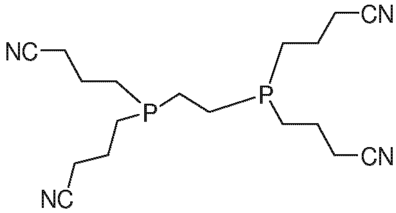

formula (II-3)

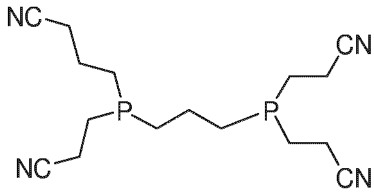

formula (II-4)

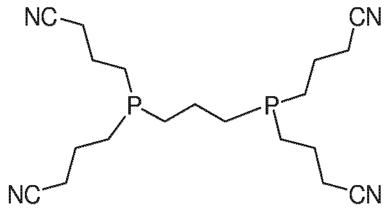

formula (II-5)

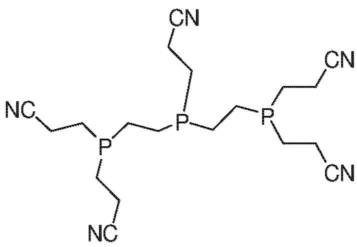

formula (II-6)

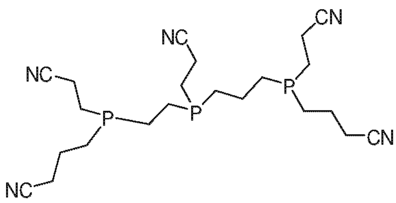

formula (II-7).

In some embodiments, the electrolyte further includes a dinitrile compound; based on the mass of the electrolyte, a mass percentage of the dinitrile compound is 0.1% to 10%; and the dinitrile compound is selected from at least one of malononitrile, succinonitrile, glutaronitrile, adiponitrile, suberonitrile, terephthalonitrile, tetradecanedinitrile, azomalononitrile, methyleneglutarodinitrile, or pentenedinitrile.

In some embodiments, a relation between b and a satisfies $4<b/a\leq 8$.

In some embodiments, b satisfies $0.1<b\leq 5$; c satisfies $0.1<c\leq 4$; and b and c satisfy $0.5\leq b/c\leq 10$.

In some embodiments, a relation between b and a satisfies $5\leq b/a\leq 6$; and b and c satisfy $1\leq b/c\leq 8.3$.

In some embodiments, this application further provides an electronic device, where the electronic device includes the aforementioned electrochemical device.

This application at least includes the following beneficial effects: The technical solutions of this application can effectively improve the cycling performance of the electrochemical device at high temperatures and room temperature.

## DETAILED DESCRIPTION

It should be understood that the disclosed embodiments are merely examples of this application. This application may be implemented in various forms. Therefore, specific details disclosed herein should not be interpreted as any limitation, and shall be used merely as a basis for the claims and serve as an illustrative basis to instruct persons skilled in the art to implement this application in various manners.

In the description of this application, unless otherwise explicitly specified and defined, the terms "formula (I)", "formula (II)", and the like are used solely for illustrative purposes and should not be understood as indicating or implying relative importance or mutual relations.

(Electrochemical device)

An electrochemical device may be a capacitor, a lithium-ion battery, a sodium-ion battery, or a zinc-ion battery. For example, it may be a lithium-ion capacitor, a lithium-ion primary battery, or a lithium-ion secondary battery.

This application discloses an electrochemical device including a positive electrode, a negative electrode, and an electrolyte.

<Electrolyte>

In some embodiments, the electrolyte includes a compound represented by formula (I):

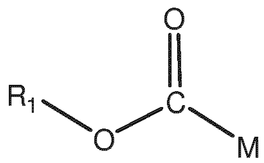 formula (I);

where M is selected from at least one of formula (I-A) or formula (I-B):

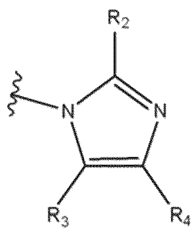 formula (I-A) 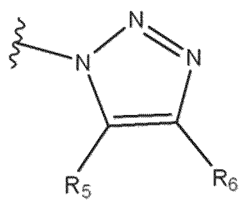 formula (I-B);

$R_1$ is selected from a substituted or unsubstituted $C_{1-6}$ alkyl group or a substituted or unsubstituted $C_{2-6}$ alkoxyalkyl group, where when substituted, a substituent group is selected from at least one of a fluorine atom, a $C_{2-6}$ alkenyl group, a $C_{2-6}$ alkynyl group, a cyano group, a sulfonyl group, or a silyl group; and

$R_2$, $R_3$, $R_4$, $R_5$, and $R_6$ are each independently selected from hydrogen, a substituted or unsubstituted $C_{1-6}$ alkyl group, a substituted or unsubstituted $C_{2-6}$ alkenyl group, a substituted or unsubstituted $C_{2-6}$ alkynyl group, a substituted or unsubstituted $C_{2-6}$ alkoxyalkyl group, a fluorine atom, a cyano group, or a sulfonyl group, where when substituted, a substituent group is selected from at least one of a fluorine atom, an aldehyde group, or a cyano group;

where in formula (I-A), $R_3$ and $R_4$ are capable of bonding to form a cyclic structure and in formula (I-B), and $R_5$ and $R_6$ are capable of bonding to form a cyclic structure; and

based on a mass of the electrolyte, a mass percentage of the compound represented by formula (I) is a%, satisfying $0.01 \leq a \leq 2$.

In this application, doping a positive electrode material with transition metal elements such as La, Y, or Nb can expand an interlayer spacing of the material while stabilizing a lattice structure. However, due to a large radius of the doping element, the doping element cannot fully enter a lattice, resulting in an uneven coating layer on a particle surface. A nitrogen atom in the compound represented by formula (I) contains lone pair electrons and is likely to be subjected to complex adsorption with transition metals and doping ions on a positive electrode surface, forming a stable interface film. This interface film can prevent the coating layer from falling off, and skeleton support of the inorganic coating layer endows the interface film with high mechanical strength and toughness, thereby improving the cycling performance.

In some embodiments, the compound represented by formula (I) is selected from at least one of compounds represented by formula (I-1) to formula (I-20):

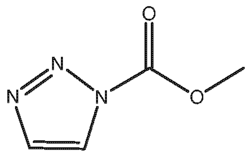 formula (I-1) 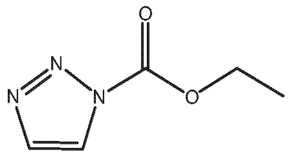 formula (I-2)

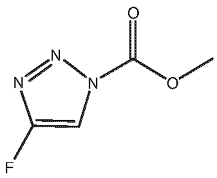 formula (I-3) 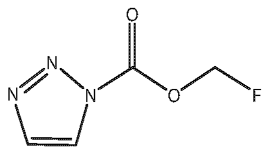 formula (I-4)

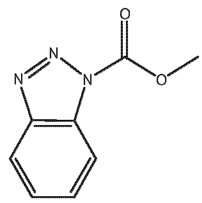 formula (I-5) 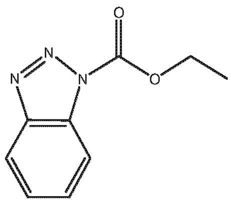 formula (I-6)

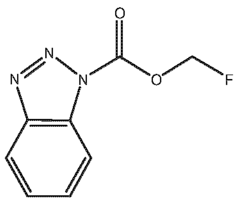 formula (I-7) 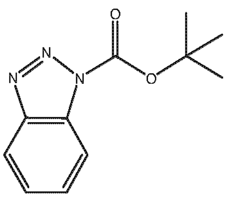 formula (I-8)

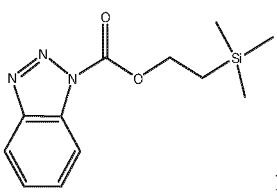 formula (I-9) 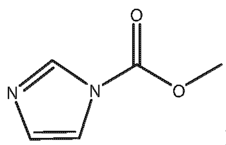 formula (I-10)

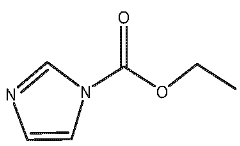 formula (I-11) 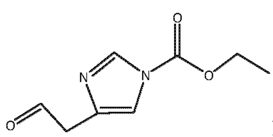 formula (I-12)

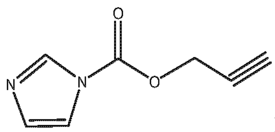 formula (I-13) 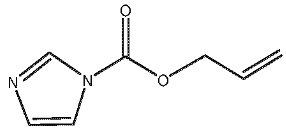 formula (I-14)

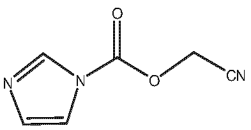 formula (I-15) 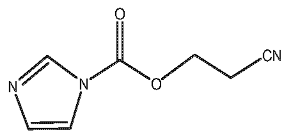 formula (I-16)

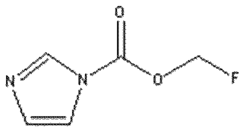 formula (I-17) 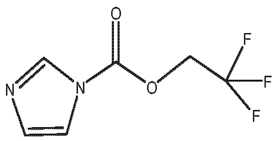 formula (I-18)

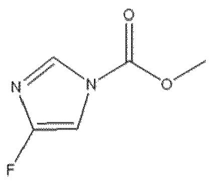 formula (I-19) 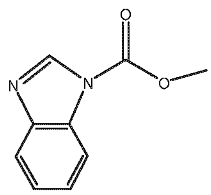 formula (I-20).

In some embodiments, the electrolyte further includes a trinitrile compound, and based on the mass of the electrolyte, a mass percentage of the trinitrile compound is b%, where $0.1<b\leq5$. The trinitrile compound is selected from at least one of 1,2,4-butanetricarbonitrile, 1,3,5-benzenetricarbonitrile, 2,4,6-trifluorobenzene-1,3,5-tricarbonitrile, 2-bromobenzene-1,3,5-tricarbonitrile, 1,3,6-hexanetricarbonitrile, 1,2,3-propanetricarbonitrile, 1,3,5-pentanetricarbonitrile, or 1,2,6-hexanetricarbonitrile.

In some embodiments, the electrolyte further includes a compound represented by formula (II):

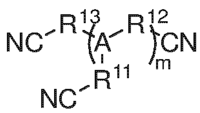 formula (II);

where m is 1, 2, or 3, and A is independently selected from formula (I-B1) or formula (I-B2):

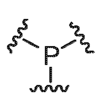 (I-B1) 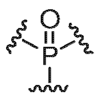 (I-B2);

where $R^{11}$, $R^{12}$, and $R^{13}$ are each independently selected from a covalent single bond, a substituted or unsubstituted $C_1$-$C_6$ alkylene group, a substituted or unsubstituted $C_2$-$C_6$ alkenylene group, a substituted or unsubstituted $C_2$-$C_{10}$ alkynylene group, or a substituted or unsubstituted $C_3$-$C_{10}$ cycloalkyl group, where when substituted, a substituent group is selected from halogen; and based on the mass of the electrolyte, a mass percentage of the compound represented by formula (II) is c%, satisfying $0.1<c\leq5$.

In some embodiments, the compound represented by formula (II) is selected from at least one of compounds represented by formula (II-1) to formula (II-7):

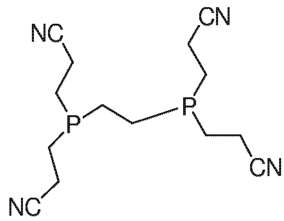

formula (II-1)

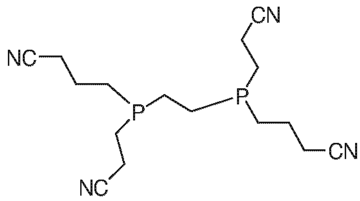

formula (II-2)

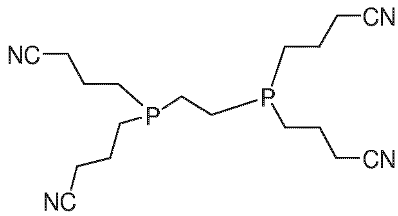

formula (II-3)

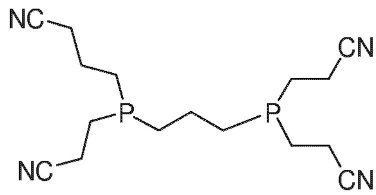

formula (II-4)

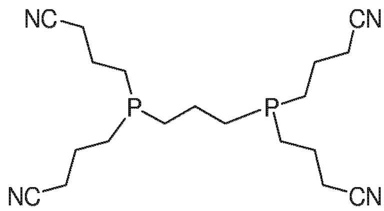

formula (II-5)

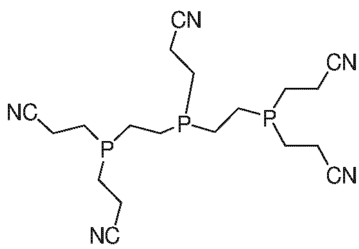

formula (II-6)

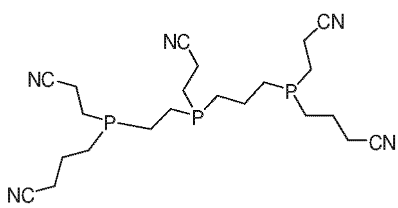

formula (II-7).

In some embodiments, the electrolyte further includes a dinitrile compound; and based on the mass of the electrolyte, a mass percentage of the dinitrile compound is 0.1% to 10%. The dinitrile compound is selected from at least one of malononitrile, succinonitrile, glutaronitrile, adiponitrile, suberonitrile, terephthalonitrile, tetradecanedinitrile, azomalononitrile, methyleneglutarodinitrile, or pentenedinitrile.
In this application, adding nitrile alone affects the cycling performance of the electrochemical device. This may be because nitriles undergo side reactions at the negative electrode. However, when the compound represented by formula (I) is used in combination with nitriles, because the compound represented by formula (I) can preferentially undergo a reduction reaction at the negative electrode than nitrile compounds, compared with a conventional negative electrode film-forming additive, the compound represented by formula (I) can form a stable SEI, effectively blocking the side reactions of nitriles at the negative electrode, and allowing the nitrile compounds to continuously act on the positive electrode, thereby improving the cycling performance of the electrochemical device at room temperature and high temperatures.
In some embodiments, a relation between b and a satisfies $4<b/a\leq8$.
In some embodiments, b satisfies $0.1<b\leq4$; c satisfies $0.1<c\leq4$; and b and c satisfy $0.5\leq b/c\leq10$.
In some embodiments, a relation between b and a satisfies $5\leq b/a\leq6$; and b and c satisfy $1\leq b/c\leq8.3$.

<Positive electrode plate>

In some embodiments, the positive electrode plate includes a positive electrode current collector and a positive electrode film disposed on at least one surface of the positive electrode current collector. The positive electrode film typically includes a positive electrode active material and a selectable positive electrode binder and conductive agent.
In some embodiments, the structure of the positive electrode plate is a structure of a positive electrode plate known in the art that may be used for electrochemical devices.
In some embodiments, the positive electrode current collector may be a metal foil or porous metal plate, such as a foil or porous plate made of metals such as aluminum, copper, nickel, titanium, silver, or their alloys. For example, the positive electrode current collector may be an aluminum foil.
In some embodiments, the positive electrode includes a positive electrode active material, the positive electrode active material includes element A, and element A is selected from at least one of La, Y, or Nb.
Based on a mass of the positive electrode active material, a mass percentage of element A is x%.
In some embodiments, at least one of the following conditions (a) to (c) is satisfied:

$$(a)\ 0.05\leq x\leq2;$$

$$(b)\ 0.01\leq a\leq2;$$

or

$$(c)\ 0.1<x/a\leq5.$$

<Negative electrode plate>

In some embodiments, the negative electrode plate includes a negative electrode current collector and a negative electrode active substance layer. The negative electrode active substance layer is provided on a surface of the negative electrode current collector. The negative electrode active substance layer includes a negative electrode active material.
In some embodiments, the structure of the negative electrode plate is a structure of a negative electrode plate structure known in the art that may be used for electrochemical devices.
The negative electrode current collector has two opposite surfaces in a thickness direction thereof, and the negative electrode active substance layer is disposed on either or both of the two opposite surfaces of the negative electrode current collector.
The negative electrode current collector may be a metal foil or porous metal plate, such as a foil or porous plate made of metals such as copper, nickel, titanium, iron, or their alloys. For example, the negative electrode current collector is a copper foil.
In some embodiments, the negative electrode active substance layer further includes a negative electrode binder and a negative electrode conductive agent. In some embodiments, the negative electrode binder includes at least one of poly(vinylidene difluoride-co-hexafluoropropylene) (PVDF-co-HFP), poly(vinylidene difluoride), polyacrylonitrile, polymethyl methacrylate, polyvinyl alcohol, carboxymethyl cellulose, hydroxypropyl cellulose, polyvinyl chloride, carboxylated polyvinyl chloride, polyvinyl fluoride, polymer containing ethylene oxide, polyvinylpyrrolidone, polyurethane, polytetrafluoroethylene, polyethylene, polypropylene, styrene-butadiene rubber, acrylic styrene-butadiene rubber, epoxy resin, or nylon.

In some embodiments, the specific type of the negative electrode conductive agent is not limited and may be selected based on requirements. For example, the conductive agent includes but is not limited to at least one of conductive graphite, superconducting carbon, acetylene black, carbon black, Ketjen black, carbon dots, carbon nanotubes, graphene, or carbon nanofiber.

In some embodiments, the negative electrode active substance layer further includes a thickener. The specific type of the thickener is not limited and may be selected based on requirements. For example, the thickener includes but is not limited to sodium carboxymethyl cellulose (CMC-Na).

In some embodiments, a preparation method for the negative electrode plate is a preparation method for a negative electrode plate known in the art that may be used for electrochemical devices. In some embodiments, a negative electrode active material and a selectable conductive agent, binder, and thickener are dispersed in a solvent to form a uniform negative electrode slurry, the negative electrode slurry is applied onto a negative electrode current collector, and processes such as drying and cold pressing are performed to obtain a negative electrode plate. The solvent is a solvent known in the art that may be used for the negative electrode active substance layer, and the solvent is, for example, but not limited to water. The solvent may be N-methylpyrrolidone (NMP) or deionized water, but this application is not limited thereto.

<Separator>

The separator is a separator known in the art that may be used for electrochemical devices, for example, but not limited to, a polyolefin microporous film. In some embodiments, the separator includes at least one of polyethylene (PE), ethylene-propylene copolymer, polypropylene (PP), ethylene-butene copolymer, ethylene-hexene copolymer, or ethylene-methyl methacrylate copolymer.

In some embodiments, the separator is a single-layer separator or a multi-layer separator.

In some embodiments, the separator is coated with a coating. In some embodiments, the coating includes at least one of an organic coating and an inorganic coating, where the organic coating includes at least one of polyvinylidene fluoride, vinylidene fluoride-hexafluoropropylene copolymer, polyacrylonitrile, polyimide, acrylonitrile-butadiene copolymer, acrylonitrile-styrene-butadiene copolymer, polymethyl methacrylate, poly(methyl acrylate), poly(ethyl acrylate), acrylic acid-styrene copolymer, polydimethylsiloxane, sodium polyacrylate, or sodium carboxymethyl cellulose; and the inorganic coating includes at least one of $SiO_2$, $Al_2O_3$, CaO, $TiO_2$, $ZnO_2$, MgO, $ZrO_2$, or $SnO_2$.

This application does not particularly impose any limitation on the form and thickness of the separator. A preparation method for the separator is a preparation method for a separator known in the art that may be used for electrochemical devices.

<Housing>

A housing is configured to package an electrode assembly. In some embodiments, the housing may be a hard housing or a flexible housing. The hard housing may be made of, for example, metal. The flexible housing may be a metal-plastic film, such as an aluminum-plastic film or a steel-plastic film.

In some embodiments, the positive electrode plate, the separator, and the negative electrode plate may be made into an electrode assembly through a winding process or a lamination process. The electrode assembly is placed in the housing, and an electrolyte is injected, followed by processes such as vacuum packaging, standing, formation, shaping, and capacity grading, to obtain an electrochemical device.

In some other embodiments, a cell is of a laminated type.

In other embodiments, the electrochemical device is used in combination with a circuit protection board.

[Electronic device]

This application further provides an electronic device including the above electrochemical device. The electronic device of this application may be any electronic device, for example, but not limited to, notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game machines, clocks, electric tools, flash lamps, cameras, large household batteries, and lithium-ion capacitors. It should be

noted that the electrochemical device of this application is not only applicable to the electronic devices listed above but also applicable to energy storage power stations, marine vehicles, and air vehicles. The air vehicles include airborne vehicles inside the atmosphere and airborne vehicles outside the atmosphere.

The following further describes this application with reference to examples. It should be understood that these examples are merely used to describe this application but not to limit the scope of this application.

Lithium-ion batteries in examples and comparative examples were all prepared according to the following methods.

(1) Preparation of electrolyte

In a glove box under argon atmosphere with a water content less than 10 ppm, ethylene carbonate (EC), propylene carbonate (PC), and diethyl carbonate (DEC) were mixed well at a mass ratio of 1:1:1, and $LiPF_6$ was added and stirred well, to prepare a base electrolyte. According to the following examples and comparative examples, an electrolyte was prepared, where based on a mass of the electrolyte in each example, a mass percentage of $LiPF_6$ was 14.4%.

(2) Preparation of doped $LiCoO_2$

Lithium cobalt oxide precursor compound $Co(OH)_2$, LiOH, and oxide containing metal element M (a mixture of lanthanum oxide ($La_2O_3$), yttrium oxide ($Y_2O_3$), or niobium oxide ($Nb_2O_5$)) were mixed at an element percentage ratio described in the table below. The mixture was mixed at 300 r/min in a high-speed mixer for 20 min, placed in an air furnace, heated to 820°C at a rate of 5°C/min, and maintained for 24 h. Then the mixture was naturally cooled and taken out to pass through a 300-mesh sieve, obtaining a modified positive electrode active material.

(3) Preparation of positive electrode plate

Positive electrode active material lithium cobalt oxide ($LiCoO_2$) or modified positive electrode active material (doped $LiCoO_2$), conductive agent carbon nanotubes (CNT), and specific binder poly(vinylidene difluoride) were mixed at a mass ratio of 95:2:3. N-methylpyrrolidone (NMP) was added into the mixture, and stirred in a vacuum mixer to form a uniform positive electrode slurry. The positive electrode slurry was then evenly applied to positive electrode current collector aluminum foil, followed by drying at 85°C, cold pressing, cutting, slitting, and drying in a vacuum condition at 85°C for 4 h, to obtain a positive electrode plate. The positive electrode active material was selected based on the following examples and comparative examples.

(4) Preparation of negative electrode plate

Negative electrode active substance graphite, binder styrene-butadiene rubber (SBR), and thickener sodium carboxymethyl cellulose (CMC-Na) were fully stirred and mixed at a mass ratio of 95:2:3 in an appropriate amount of deionized water solvent, to prepare a uniform negative electrode slurry; and this slurry was applied onto a negative electrode current collector Cu foil, followed by drying and cold pressing, to obtain a negative electrode plate.

(5) Preparation of separator

A polyethylene (PE) film was used as the separator.

(6) Preparation of lithium-ion battery

The positive electrode plate, the separator, and the negative electrode plate were stacked in order, with the separator sandwiched between the positive electrode plate and the negative electrode plate for isolation, wound, and placed in an outer packaging foil. The prepared electrolyte was injected into a dried battery to complete the preparation of a lithium-ion battery after processes such as vacuum packaging, standing, formation, and shaping.

Subsequently, performance tests were conducted on the lithium-ion batteries of the following examples and comparative examples.

Next, the performance of the lithium-ion batteries was tested.

(1) Method for testing capacity retention rate of lithium-ion battery

At 25°C/45°C, the lithium-ion battery was charged at a constant current of 0.7C to 4.5 V, charged at a constant voltage to a current of 0.05C, and discharged at a constant current of 1C to 3.0 V. This was the first cycle. The lithium-ion

battery was cycled many times under the foregoing conditions. A first discharge capacity was taken as 100%. The charge and discharge cycle was repeated until the discharge capacity decayed to 80%, and the number of cycles was recorded as an indicator to evaluate the cycling performance of the lithium-ion battery.

(2) ITC performance test

At 45°C, the lithium-ion battery was charged at a constant current of 0.7C to 4.5 V, and then charged at a constant voltage to a current of 0.05C. After left standing for 8 h, the lithium-ion battery was discharged at a constant current of 1C to 3.0 V, and left standing for another 8 h. This was the first cycle. The lithium-ion battery was cycled many times under the foregoing conditions. A first discharge capacity was taken as 100%. The charge and discharge cycle was repeated until the discharge capacity decayed to 80%, and the number of cycles was recorded as an indicator to evaluate the cycling performance of the lithium-ion battery.

The specific test results are shown below:

**Table 1 shows parameters of Comparative examples 1-1 to 1-3 and Examples 1-1 to 1-34**

| | Element A | | Compound represented by formula I | | x/a | 25°C 700 cls | 25°C 500 cls | 45°C ITC 100 cls |
|---|---|---|---|---|---|---|---|---|
| | Type | Percentage x (%) | Type | Percentage a (%) | | | | |
| Example 1-1 | La | 0.5 | Formula (I-1) | 0.5 | 1 | 74.17% | 74.49% | 60.57% |
| Example 1-2 | La | 1 | Formula (I-1) | 0.5 | 2 | 72.20% | 75.24% | 60.93% |
| Example 1-3 | La | 2 | Formula (I-1) | 0.5 | 4 | 70.39% | 75.96% | 61.39% |
| Example 1-4 | La | 1 | Formula (I-2) | 0.5 | 2 | 72.38% | 72.56% | 63.00% |
| Example 1-5 | La | 1 | Formula (I-2) | 1 | 1 | 69.87% | 71.26% | 62.74% |
| Example 1-6 | La | 1 | Formula (I-2) | 2 | 0.5 | 67.71% | 71.19% | 61.36% |
| Example 1-7 | La | 1 | Formula (I-3) | 0.5 | 2 | 71.55% | 74.24% | 63.93% |
| Example 1-8 | La | 1 | Formula (I-4) | 0.5 | 2 | 83.69% | 72.45% | 64.52% |
| Example 1-9 | La | 1 | Formula (I-5) | 0.5 | 2 | 72.38% | 71.98% | 64.15% |
| Example 1-10 | La | 1 | Formula (I-6) | 0.5 | 2 | 78.29% | 72.65% | 57.10% |
| Example 1-11 | La | 1 | Formula (I-7) | 0.5 | 2 | 70.22% | 73.26% | 58.26% |
| Example 1-12 | La | 1 | Formula (I-8) | 0.5 | 2 | 72.39% | 76.38% | 64.33% |
| Example 1-13 | La | 1 | Formula (I-9) | 0.5 | 2 | 86.18% | 73.67% | 66.30% |
| Example 1-14 | La | 1 | Formula (I-10) | 0.5 | 2 | 72.58% | 72.85% | 61.89% |
| Example 1-15 | La | 1 | Formula (I-11) | 0.5 | 2 | 79.27% | 73.90% | 63.22% |
| Example 1-27 | La | 1 | Formula (I-12) | 0.5 | 2 | 70.28% | 75.38% | 62.33% |

(continued)

| | Element A | | Compound represented by formula I | | x/a | 25°C 700 cls | 25°C 500 cls | 45°C ITC 100 cls |
|---|---|---|---|---|---|---|---|---|
| | Type | Percentage x (%) | Type | Percentage a (%) | | | | |
| Example 1-16 | Y | 0.5 | Formula (I-9) | 0.5 | 1 | 78.22% | 72.56% | 65.09% |
| Example 1-17 | Y | 1 | Formula (I-9) | 0.5 | 2 | 81.21% | 74.28% | 67.74% |
| Example 1-18 | Y | 2 | Formula (I-9) | 0.5 | 4 | 78.27% | 76.87% | 66.09% |
| Example 1-19 | Y | 1 | Formula (I-13) | 0.5 | 2 | 85.10% | 77.80% | 68.31% |
| Example 1-20 | Y | 1 | Formula (I-14) | 0.5 | 2 | 79.28% | 76.27% | 66.99% |
| Example 1-21 | Y | 1 | Formula (I-15) | 0.5 | 2 | 82.19% | 76.38% | 65.50% |
| Example 1-22 | Y | 1 | Formula (I-16) | 0.5 | 2 | 88.26% | 74.67% | 60.23% |
| Example 1-23 | Y | 1 | Formula (I-17) | 0.5 | 2 | 81.26% | 73.78% | 62.19% |
| Example 1-24 | Y | 1 | Formula (I-18) | 0.5 | 2 | 86.29% | 71.90% | 64.88% |
| Example 1-25 | Y | 1 | Formula (I-19) | 0.5 | 2 | 77.20% | 74.56% | 62.90% |
| Example 1-26 | Y | 1 | Formula (I-20) | 0.5 | 2 | 79.40% | 76.19% | 65.30% |
| Example 1-27 | Nb | 0.5 | Formula (I-3) | 0.5 | 1 | 79.26% | 74.28% | 60.80% |
| Example 1-28 | Nb | 1 | Formula (I-3) | 0.5 | 2 | 80.43% | 71.86% | 61.20% |
| Example 1-29 | Nb | 2 | Formula (I-3) | 0.5 | 4 | 85.38% | 73.90% | 61.37% |
| Example 1-30 | Nb | 0.5 | Formula (I-4) | 0.5 | 1 | 77.28% | 72.79% | 60.34% |
| Example 1-31 | Nb | 0.5 | Formula (I-9) | 0.5 | 1 | 88.28% | 75.39% | 62.13% |
| Example 1-32 | Nb | 0.5 | Formula (I-2) | 0.5 | 1 | 79.37% | 70.18% | 60.92% |
| Example 1-33 | Nb | 0.5 | Formula (I-13) | 0.5 | 1 | 77.29% | 76.23% | 60.16% |
| Example 1-34 | Nb | 0.5 | Formula (I-20) | 0.5 | 1 | 79.27% | 70.12% | 61.22% |
| Comparative example 1-1 | / | / | / | / | / | 65.44% | 66.36% | 54.90% |
| Comparative example 1-2 | La | 0.5 | / | / | / | 66.29% | 68.16% | 56.48% |

(continued)

| | Element A | | Compound represented by formula I | | x/a | 25°C 700 cls | 25°C 500 cls | 45°C ITC 100 cls |
|---|---|---|---|---|---|---|---|---|
| | Type | Percentage x (%) | Type | Percentage a (%) | | | | |
| Comparative example 1-3 | / | / | Formula (1-1) | 0.5 | / | 66.16% | 67.46% | 55.50% |

A nitrogen atom in the compound represented by formula (I) contains lone pair electrons and is likely to be subjected to complex adsorption with transition metals and doping ions on a positive electrode surface, forming a stable interface film. This interface film can prevent the coating layer from falling off, and skeleton support of the inorganic coating layer endows the interface film with high mechanical strength and toughness, thereby improving the cycling performance.

**Table 2 shows parameters of Example 1-19, Examples 2-1 to 2-18, and Comparative example 2-1**

| | Compound represented by formula I | | Dinitrile compound | | Trinitrile compound | | b/a | 25°C 700 cls | 45°C 500 cls | 45°C ITC 100 cls |
|---|---|---|---|---|---|---|---|---|---|---|
| | Type | Percentage a (%) | Type | Percentage (%) | Type | Percentage b (%) | | | | |
| Example 1-19 | Formula (I-13) | 0.5 | / | / | / | / | / | 85.10% | 77.80% | 68.31 % |
| Example 2-1 | Formula (I-13) | 0.5 | Malononitrile | 2 | / | / | / | 86.56% | 78.32% | 69.59% |
| Example 2-2 | Formula (I-13) | 0.5 | / | / | 1,2,4-butanetricarbonitrile | 2 | 4 | 85.69% | 79.18% | 70.28% |
| Example 2-3 | Formula (I-1) | 0.5 | Malononitrile | 1 | 1,2,4-butanetricarbonitrile | 2 | 4 | 86.52% | 79.28% | 70.10% |
| Example 2-4 | Formula (I-2) | 0.5 | Malononitrile | 1.5 | 1,2,4-butanetricarbonitrile | 2.5 | 5 | 87.38% | 80.47% | 71.44% |
| Example 2-5 | Formula (I-3) | 0.5 | Malononitrile | 2 | 1,2,4-butanetricarbonitrile | 3 | 6 | 86.98% | 82.46% | 73.22% |
| Example 2-6 | Formula (I-4) | 0.5 | Butanedinitrile | 1 | 1,3,5-benzenetricarbonitrile | 2.5 | 5 | 79.38% | 82.28% | 74.30% |
| Example 2-7 | Formula (I-5) | 0.5 | Butanedinitrile | 2 | 1,3,5-benzenetricarbonitrile | 2.5 | 5 | 80.26% | 83.28% | 76.80% |
| Example 2-8 | Formula (1-6) | 0.5 | Butanedinitrile | 3 | 1,3,5-benzenetricarbonitrile | 2.5 | 5 | 80.41% | 85.81% | 76.30% |
| Example 2-9 | Formula (I-7) | 0.5 | Terephthalonitrile | 2.5 | 1,3,5-benzenetricarbonitrile | 2 | 4 | 73.38% | 79.28% | 67.11% |
| Example 2-10 | Formula (I-8) | 0.5 | Terephthalonitrile | 2.5 | 2,4,6-trifluorobenzene-1,3,5-tricarbonitrile | 3 | 6 | 73.22% | 80.82% | 68.89% |
| Example 2-11 | Formula (1-9) | 0.5 | Terephthalonitrile | 2.5 | 1,3,6-hexanetricarbonitrile | 4 | 8 | 72.37% | 80.89% | 69.24% |
| Example 2-12 | Formula (I-10) | 0.5 | Adiponitrile | 2.5 | 1,3,6-hexanetricarbonitrile | 2 | 4 | 79.38% | 81.89% | 69.16% |
| Example 2-13 | Formula (I-11) | 0.5 | Adiponitrile | 2.5 | 1,2,3-propanetricarbonitrile | 3 | 6 | 79.26% | 82.48% | 70.14% |

(continued)

| | Compound represented by formula I | | Dinitrile compound | | Trinitrile compound | | b/a | 25°C 700 cls | 45°C 500 cls | 45°C ITC 100 cls |
|---|---|---|---|---|---|---|---|---|---|---|
| | Type | Percentage a (%) | Type | Percentage (%) | Type | Percentage b (%) | | | | |
| Example 2-14 | Formula (I-12) | 0.5 | Adiponitrile | 2.5 | 1,3,5-pentanetricarbonitrile | 4 | 8 | 78.37% | 82.78% | 70.25% |
| Example 2-15 | Formula (I-13) | 0.5 | Glutaronitrile | 2.5 | 1,3,5-pentanetricarbonitrile | 2.5 | 5 | 87.10% | 80.44% | 68.27% |
| Example 2-16 | Formula (I-14) | 0.5 | Glutaronitrile | 2.5 | 1,2,6-hexanetricarbonitrile | 3 | 6 | 87.28% | 81.29% | 69.34% |
| Example 2-17 | Formula (I-12) | 1 | Adiponitrile | 2.5 | 1,3,5-pentanetricarbonitrile | 2 | 2 | 69.74% | 77.54% | 65.14% |
| Example 2-18 | Formula (I-12) | 0.4 | Adiponitrile | 2.5 | 1,3,5-pentanetricarbonitrile | 4 | 10 | 65.31% | 74.64% | 63.58% |
| Comparativ e example 2-1 | / | / | Adiponitrile | 2.5 | 1,3,5-benzenetricarbonitrile | 2 | / | 60.67% | 57.45% | 50.23% |

As shown in data in Table 2, adding nitrile compounds alone deteriorates the cycling performance because nitriles undergo side reactions at the negative electrode. The compound represented by formula (I) is used in combination with nitrile compounds, because the compound represented by formula (I) preferentially undergoes a reduction reaction at the negative electrode to form a stable SEI, protecting a negative electrode interface and blocking the side reactions of the nitrile compounds at the negative electrode, so as to better protect the positive electrode, thereby improving the cycling performance at room temperature and high temperatures.

**Table 3 shows parameters of Example 1-19, and Examples 3-1 to 3-12**

| | Compound represented by formula I | | Dinitrile compound | | Trinitrile compound | | Compound represented by formula II | | b/c | 25°C 700 cls | 45°C 500 cls | 45°C ITC 100 cls |
|---|---|---|---|---|---|---|---|---|---|---|---|---|
| | Type | Percentage a (%) | Type | Percentage (%) | Type | Percentage b (%) | Type | Percentage c (%) | | | | |
| Example 1-19 | Formula (I-13) | 0.5 | / | / | / | / | / | / | / | 85.10% | 77.80% | 68.31 % |
| Example 3-1 | Formula (I-13) | 0.5 | / | / | / | / | Formula (II-1) | 0.3 | / | 86.39% | 78.39% | 69.98% |
| Example 3-2 | Formula (I-13) | 0.5 | / | / | / | / | Formula (II-1) | 0.5 | / | 87.19% | 79.39% | 71.39% |
| Example 3-3 | Formula (I-13) | 0.5 | / | / | / | / | Formula (II-1) | 0.8 | / | 86.29% | 79.47% | 72.20% |
| Example 3-4 | Formula (I-13) | 0.5 | Malononitrile | 2 | / | / | Formula (II-1) | 0.5 | / | 88.29% | 81.90% | 73.59% |
| Example 3-5 | Formula (I-13) | 0.5 | / | / | 1,2,4-butanetricarbonitrile | 2 | Formula (II-1) | 0.5 | 4 | 86.89% | 82.39% | 74.29% |
| Example 3-6 | Formula (I-13) | 1.5 | Malononitrile | 2 | 1,2,4-butanetricarbonitrile | 2 | Formula (II-1) | 0.5 | 4 | 87.47% | 84.29% | 76.39% |
| Example 3-7 | Formula (I-13) | 0.5 | / | / | 1,2,4-butanetricarbonitrile | 1.2 | Formula (II-1) | 4 | 0.3 | 81.25% | 76.13% | 68.96% |
| Example 3-8 | Formula (I-13) | 0.5 | / | / | 1,2,4-butanetricarbonitrile | 2 | Formula (II-1) | 4 | 0.5 | 81.35% | 79.21% | 72.13% |
| Example 3-9 | Formula (I-13) | 0.5 | / | / | 1,2,4-butanetricarbonitrile | 1.5 | Formula (II-1) | 1.5 | 1 | 87.47% | 83.06% | 74.58% |
| Example 3-9 | Formula (I-13) | 0.5 | / | / | 1,2,4-butanetricarbonitrile | 2 | Formula (II-1) | 1 | 2 | 88.32% | 83.18% | 75.17% |
| Example 3-10 | Formula (I-13) | 0.5 | / | / | 1,2,4-butanetricarbonitrile | 2.5 | Formula (II-1) | 0.3 | 8.3 | 87.74% | 81.57% | 75.29% |
| Example 3-11 | Formula (I-13) | 0.5 | / | / | 1,2,4-butanetricarbonitrile | 5 | Formula (II-1) | 0.5 | 10 | 82.54% | 79.29% | 71.89% |
| Example 3-12 | Formula (I-13) | 0.5 | / | / | 1,2,4-butanetricarbonitrile | 4 | Formula (II-1) | 0.3 | 13.3 | 79.28% | 77.14% | 69.83% |

As shown in data in Table 3, the combined use of the compound represented by formula I, nitrile compounds, and the compound represented by formula II can improve cycling performance at room temperature and high temperatures.

The disclosed features are not intended to limit the scope of this disclosure. Therefore, equivalent changes made based on the content of the claims of this disclosure should be included within the scope of the claims of this disclosure.

## Claims

1. An electrochemical device, comprising a positive electrode, a negative electrode, and an electrolyte, wherein

   the positive electrode comprises a positive electrode active material, the positive electrode active material comprises element A, and element A is selected from at least one of La, Y, or Nb;
   based on a mass of the positive electrode active material, a mass percentage of element A is x%, satisfying $0.05 \leq x \leq 2$; and
   the electrolyte comprises a compound represented by formula (I):

   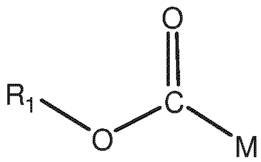
   formula (I);

   wherein M is selected from at least one of formula (I-A) or formula (I-B):

   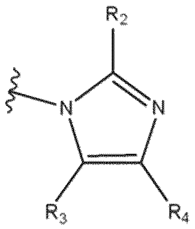
   formula (I-A)
   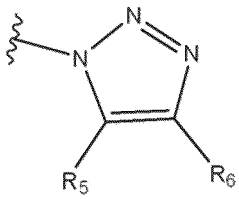
   formula (I-B);

   $R_1$ is selected from a substituted or unsubstituted $C_{1-6}$ alkyl group or a substituted or unsubstituted $C_{2-6}$ alkoxyalkyl group, wherein when substituted, a substituent group is selected from at least one of a fluorine atom, a $C_{2-6}$ alkenyl group, a $C_{2-6}$ alkynyl group, a cyano group, a sulfonyl group, or a silyl group; and
   $R_2$, $R_3$, $R_4$, $R_5$, and $R_6$ are each independently selected from hydrogen, a substituted or unsubstituted $C_{1-6}$ alkyl group, a substituted or unsubstituted $C_{2-6}$ alkenyl group, a substituted or unsubstituted $C_{2-6}$ alkynyl group, a substituted or unsubstituted $C_{2-6}$ alkoxyalkyl group, a fluorine atom, a cyano group, or a sulfonyl group, wherein when substituted, a substituent group is selected from at least one of a fluorine atom, an aldehyde group, or a cyano group;
   wherein in formula (I-A), $R_3$ and $R_4$ are capable of bonding to form a cyclic structure, and in formula (I-B), $R_5$ and $R_6$ are capable of bonding to form a cyclic structure; and
   based on a mass of the electrolyte, a mass percentage of the compound represented by formula (I) is a%, satisfying $0.01 \leq a \leq 2$.

2. The electrochemical device according to claim 1, wherein
   the compound represented by formula (I) is selected from at least one of compounds represented by formula (I-1) to formula (I-20):

   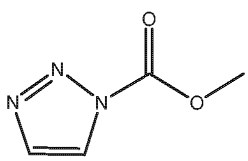
   formula (I-1)
   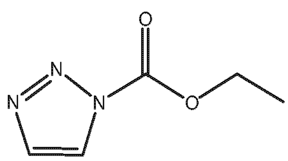
   formula (I-2)

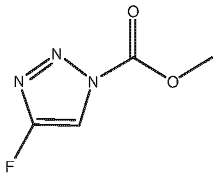 formula (I-3) 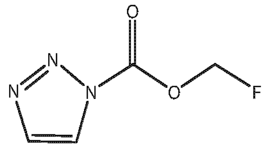 formula (I-4)

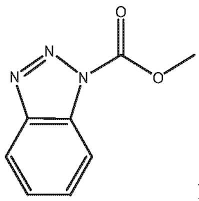 formula (I-5) 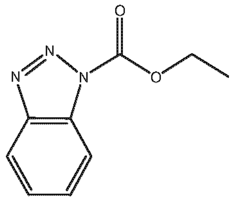 formula (I-6)

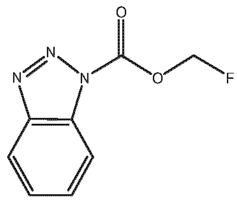 formula (I-7) 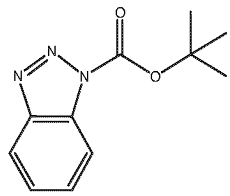 formula (I-8)

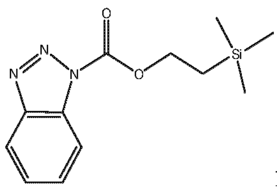 formula (I-9) 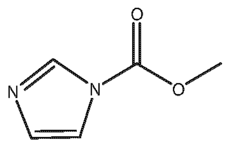 formula (I-10)

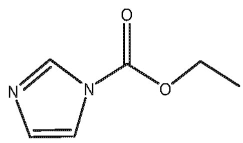 formula (I-11) 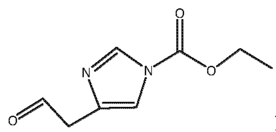 formula (I-12)

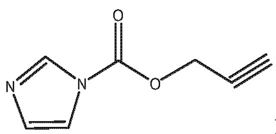 formula (I-13) 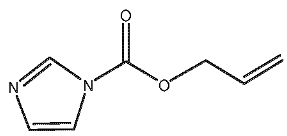 formula (I-14)

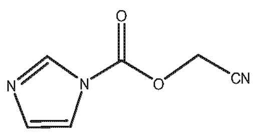 formula (I-15) 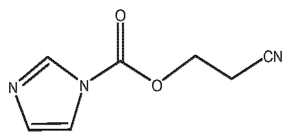 formula (I-16)

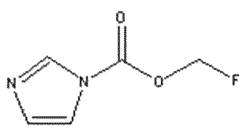 formula (I-17) 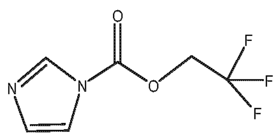 formula (I-18)

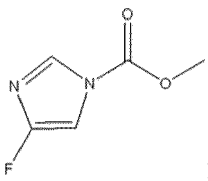 formula (I-19) 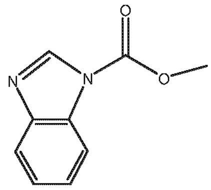 formula (I-20).

3. The electrochemical device according to claim 1, wherein $0.1<x/a\leq5$ is satisfied, and preferably, $1.5\leq x/a\leq3$ is satisfied.

4. The electrochemical device according to claim 1, wherein

the electrolyte further comprises a trinitrile compound;
based on the mass of the electrolyte, a mass percentage of the trinitrile compound is b%, satisfying $0.1<b\leq5$; and the trinitrile compound is selected from at least one of 1,2,4-butanetricarbonitrile, 1,3,5-benzenetricarbonitrile, 2,4,6-trifluorobenzene-1,3,5-tricarbonitrile, 2-bromobenzene-1,3,5-tricarbonitrile, 1,3,6-hexanetricarbonitrile, 1,2,3-propanetricarbonitrile, 1,3,5-pentanetricarbonitrile, or 1,2,6-hexanetricarbonitrile.

5. The electrochemical device according to claim 1, wherein

the electrolyte further comprises a compound represented by formula (II):

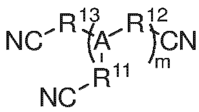 formula (II);

wherein m is 1, 2, or 3, and A is independently selected from formula (I-B1) or formula (I-B2):

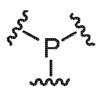 (I-B1) 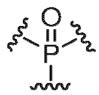 (I-B2);

wherein $R^{11}$, $R^{12}$, and $R^{13}$ are each independently selected from a covalent single bond, a substituted or unsubstituted $C_1$-$C_6$ alkylene group, a substituted or unsubstituted $C_2$-$C_6$ alkenylene group, a substituted or unsubstituted $C_2$-$C_{10}$ alkynylene group, or a substituted or unsubstituted $C_3$-$C_{10}$ cycloalkylene group, wherein when substituted, a substituent group is selected from halogen; and
based on the mass of the electrolyte, a mass percentage of the compound represented by formula (II) is c%, satisfying $0.1<c\leq5$.

6. The electrochemical device according to claim 5, wherein the compound represented by formula (II) is selected from at least one of compounds represented by formula (II-1) to formula (II-7):

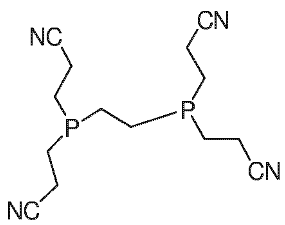 formula (II-1)

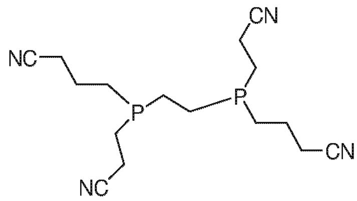

formula (II-2)

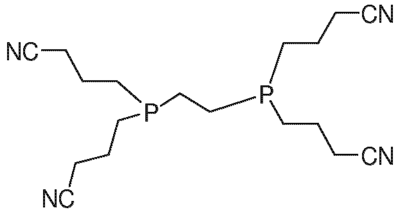

formula (II-3)

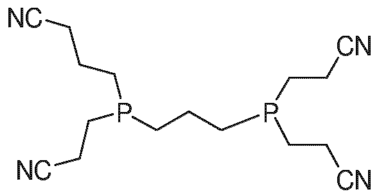

formula (II-4)

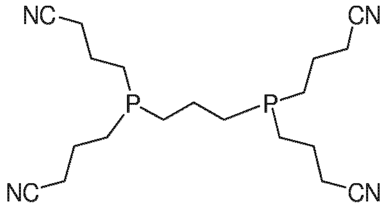

formula (II-5)

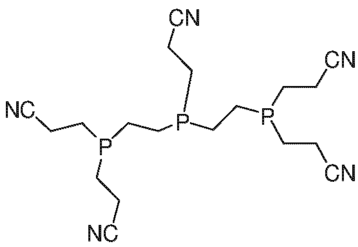

formula (II-6)

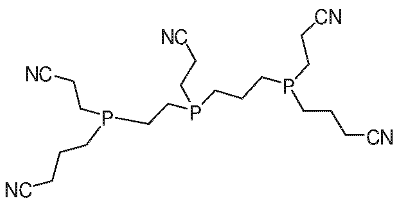

formula (II-7).

**7.** The electrochemical device according to claim 1, wherein

the electrolyte further comprises a dinitrile compound;
based on the mass of the electrolyte, a mass percentage of the dinitrile compound is 0.1% to 5%; and
the dinitrile compound is selected from at least one of malononitrile, succinonitrile, glutaronitrile, adiponitrile, suberonitrile, terephthalonitrile, tetradecanedinitrile, azomalononitrile, methyleneglutarodinitrile, or pentenedinitrile.

**8.** The electrochemical device according to claim 4, wherein $4<b/a\leq 8$ is satisfied.

**9.** The electrochemical device according to claim 5, wherein

the electrolyte further comprises a trinitrile compound, and based on the mass of the electrolyte, a mass percentage of the trinitrile compound is b%; and
$0.5<b/c\leq 10$ is satisfied, and preferably, $1\leq b/c\leq 8.3$.

**10.** An electronic device, comprising the electrochemical device according to any one of claims 1 to 9.

**INTERNATIONAL SEARCH REPORT**

International application No.
**PCT/CN2022/123019**

**A. CLASSIFICATION OF SUBJECT MATTER**

H01M10/0567(2010.01)i; H01M4/36(2006.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI; STN: 电解液, 添加剂, 咪唑, 氮, 腈, 氰, 磷, electrolyte, additive, imidazole, nitrogen, nitrile, cyanogen, phosphorus

**C. DOCUMENTS CONSIDERED TO BE RELEVANT**

| Category* | Citation of document, with indication, where appropriate, of the relevant passages | Relevant to claim No. |
|---|---|---|
| X | CN 114946065 A (LG ENERGY SOLUTION LTD.) 26 August 2022 (2022-08-26) description, paragraphs 4-135 | 1-3, 10 |
| Y | CN 114946065 A (LG ENERGY SOLUTION LTD.) 26 August 2022 (2022-08-26) description, paragraphs 4-135 | 4-9 |
| Y | WO 2022032585 A1 (NINGDE AMPEREX TECHNOLOGY LTD.) 17 February 2022 (2022-02-17) description, page 1, paragraph 4 to page 20, paragraph 3 | 4-9 |
| X | CN 113839095 A (ZHUHAI COSMX BATTERY CO., LTD.) 24 December 2021 (2021-12-24) description, paragraphs 2-53 | 1-3, 10 |
| Y | CN 113839095 A (ZHUHAI COSMX BATTERY CO., LTD.) 24 December 2021 (2021-12-24) description, paragraphs 2-53 | 4-9 |
| X | CN 113692668 A (LG ENERGY SOLUTION LTD.) 23 November 2021 (2021-11-23) description, paragraphs 4-140 | 1-3, 7, 10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 June 2023** | **19 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2022/123019**

**C. DOCUMENTS CONSIDERED TO BE RELEVANT**

| Category* | Citation of document, with indication, where appropriate, of the relevant passages | Relevant to claim No. |
|---|---|---|
| Y | CN 113692668 A (LG ENERGY SOLUTION LTD.) 23 November 2021 (2021-11-23) description, paragraphs 4-140 | 4-6, 8, 9 |
| X | CN 114641883 A (LG ENERGY SOLUTION LTD.) 17 June 2022 (2022-06-17) description, paragraphs 2-110 | 1-3, 7, 10 |
| Y | CN 114641883 A (LG ENERGY SOLUTION LTD.) 17 June 2022 (2022-06-17) description, paragraphs 2-110 | 4-6, 8, 9 |
| A | JP 2008027778 A (SONY CORP.) 07 February 2008 (2008-02-07) entire document | 1-10 |

Form PCT/ISA/210 (second sheet) (July 2022)

**INTERNATIONAL SEARCH REPORT**
**Information on patent family members**

International application No.
**PCT/CN2022/123019**

| Patent document cited in search report | | | Publication date (day/month/year) | Patent family member(s) | | | Publication date (day/month/year) |
|---|---|---|---|---|---|---|---|
| CN | 114946065 | A | 26 August 2022 | EP | 4080636 | A1 | 26 October 2022 |
| | | | | WO | 2022055258 | A1 | 17 March 2022 |
| | | | | US | 2023089885 | A1 | 23 March 2023 |
| | | | | KR | 20220033455 | A | 16 March 2022 |
| WO | 2022032585 | A1 | 17 February 2022 | US | 2022052382 | A1 | 17 February 2022 |
| | | | | KR | 20210074393 | A | 21 June 2021 |
| | | | | JP | 2022547364 | A | 14 November 2022 |
| | | | | EP | 3985773 | A1 | 20 April 2022 |
| CN | 113839095 | A | 24 December 2021 | | None | | |
| CN | 113692668 | A | 23 November 2021 | KR | 20200074902 | A | 25 June 2020 |
| | | | | KR | 102474678 | B1 | 08 December 2022 |
| | | | | US | 2021328266 | A1 | 21 October 2021 |
| | | | | WO | 2020130575 | A1 | 25 June 2020 |
| | | | | EP | 3879617 | A1 | 15 September 2021 |
| CN | 114641883 | A | 17 June 2022 | US | 2023095613 | A1 | 30 March 2023 |
| | | | | EP | 4060781 | A1 | 21 September 2022 |
| | | | | WO | 2021167428 | A1 | 26 August 2021 |
| | | | | KR | 20210106923 | A | 31 August 2021 |
| | | | | JP | 2022551058 | A | 07 December 2022 |
| | | | | IN | 202217030485 | A | 09 September 2022 |
| JP | 2008027778 | A | 07 February 2008 | US | 2008032194 | A1 | 07 February 2008 |
| | | | | US | 8318343 | B2 | 27 November 2012 |
| | | | | JP | 4215078 | B2 | 28 January 2009 |

Form PCT/ISA/210 (patent family annex) (July 2022)